Europäisches Patentamt

European Patent Office

Office européen des brevets

(11) Numéro de publication: **0 406 132 A1**

# (12) DEMANDE DE BREVET EUROPEEN

(21) Numéro de dépôt: **90420301.5**

(22) Date de dépôt: **26.06.90**

(51) Int. Cl.⁵: **A01G 1/06**

(30) Priorité: **26.06.89 FR 8908663**

(43) Date de publication de la demande:
**02.01.91 Bulletin 91/01**

(84) Etats contractants désignés:
**ES GR IT**

(71) Demandeur: **LEOTRONIC**
**Montréal**
**F-07110 L'Argentière(FR)**

(72) Inventeur: **Boissin, Léopold**
**Montréal**
**F-07110 L'Argentière(FR)**

(74) Mandataire: **Laurent, Michel et al**
**Cabinet Laurent et Charras 20, rue Louis**
**Chirpaz B.P. 32**
**F-69131 Ecully Cédex(FR)**

(54) **Procédé et dispositif destiné à découper des tiges végétales pleines en vue de produire des boutures.**

(57) Procédé permettant de découper des tiges végétales pleines en vue de produire des boutures.

Il se caractérise en ce que en ce qu'il consiste :
- à déplacer sur toute sa longueur la tige végétale (14) devant un système de détection de forme (5) ;
- à produire simultanément au déplacement de la tige des impulsions permettant de déterminer la dimension minimale de la bouture ;
- à déceler la présence d'yeux ou d'aspérités (2) au moyen dudit système de détection de forme (5) ;
- à procéder à la coupe.

Fig.1

# PROCEDE ET DISPOSITIF DESTINE A DECOUPER DES TIGES VEGETALES PLEINES EN VUE DE PRODUI-RE DES BOUTURES

La présente invention concerne un procédé et un outil de coupe pour découper des tiges végétales pleines en vue de produire des boutures en longueurs déterminées:
- par une valeur minimum ;
- par rapport à la position des aspérités spécifiques détectées sur ces tiges à proximité du point de coupe.

Ces tiges peuvent être des sarments de vigne dont les aspérités sont les yeux ou les bourgeons ; il peut également s'agir de tous végétaux sous forme de tiges que l'on veut découper à une longueur déterminée.

Les systèmes de coupe existants focntionnant sur différentes machines à débouturer les sarments de vigne, utilisent le principe de la coupe des sécateurs manuels. Ces systèmes sont formés d'une lame et d'une contre-lame dont le mouvement de coupe se trouve être à la perpendiculaire du mouvement d'avance du sarment, oar celui-ci avance selon son axe longitudinal. Les inconvénients majeurs de ce principe sont l'amorce de la coupe sur la peau du sarment (pelage) le temps de réponse de la coupe, qui est indépendant de la vitesse d'avance des tiges (à des vitesses différentes les distances de coupe ne peuvent être identiques). Le blocage de l'avance du sarment pendant le temps nécessaire à la coupe, limite considérablement la vitesse d'avance du sarment. Pendant ce temps, plusieurs possibilités : ou bien la mécanique d'entraînement stoppe les rouleaux presseurs qui font mouvoir les tiges, ou bien ces rouleaux patinent sur le sarment ou encore le sarment a la possibilité de se cambrer. Ce procédé limite la vitesse d'avance des tiges et la précision de la coupe (exemple à une vitesse d'avance de 40 m/mn pour un temps de coupe de 30 mili seconde, la tige parcourt 26 mm).

La réalisation du système de coupe passe par des impératifs de temps, de longueur et de détection des aspérités de la tige afin de choisir le point de coupe. Pour des tiges dont la longueur finale est comprise entre 1 mètre et 4 mètres, la vitesse linéaire devra être supérieure à 40 m/mn. Pour des tiges dont la longueur finale est inférieure à l'mètre, la vitesse linéaire devra être supérieure à 20 m/mn.

Les précisions de coupe ne sont pas obtenues en fonction de la longueur de coupe, mais en fonction (notamment pour les sarments de vigne) de la position des yeux sur ces sarments ; car ce sont au niveau des yeux que la bouture va fabriquer ses racines pour constituer un plant de vigne. La tolérance est de 6 mm pour les longueurs finales supérieures à 1m, elle est de 3 mm pour les longueurs finales inférieures à 1m.

L'idée générale de l'invention consiste à entraîner l'outil de coupe à la vitesse de défilement des tiges et de le rendre synchrone au point de coupe celui-ci est déterminé par un paramètre longueur minimum et la position des aspérités sur les tiges.

La présente invention concerne un procédé de coupe rapide et précis des tiges végétales pleines en vue de produire des boutures, caractérisé en ce qu'il consiste:
- à déplacer sur toute sa longueur la tige végétale devant un système de détection de forme ;
- à produire simultanément au déplacement de la tige des impulsions permettant de déterminer la dimension minimale de la bouture ;
- à déceler la présence d'yeux ou d'aspérités au moyen du système de détection de forme ;
- à procéder à la coupe.

Avantageusement, selon le procédé conforme à l'invention :
- la coupe est obtenue par la mise en mouvement de couteaux par excitation d'un embrayage ;
- on détecte la fin du cycle de coupe en générant une impulsion produite par un capteur sensible à une information disposé sur un engrenage solidaire de l'embrayage précité.

La mise en oeuvre de ce procédé est réalisé à l'aide d'un dispositif qui fait également partie de l'invention et qui, d'une manière générale, est constitué essentiellement de deux rotors cylindriques supportant des lames de coupe réparties autour des rotors et en nombre égal sur chaque rotor, ces rotors tournant par tour ou par tiers de tour au moment de la coupe, en sens inverse l'un par rapport à l'autre, et étant solidaires et entraînés en rotation par des engrenages qui permettent de faire passer les lames une devant l'autre avec un jeu et un empiètement minimums.

Selon une forme de réalisation, le dispositif conforme à l'invention comporte en combinaison :
- un dispositif d'entraînement des tiges, entraînant ces dernières dans un système de détection de forme relié à un calculateur mettant en mouvement des rotors munis d'outils de coupe, associé à un dispositif de positionnement mû par un ensemble embrayage-frein lui-même entraîné par le dispositif d'entraînement des tiges permettant ainsi la commande de la coupe ;
- un codeur dont l'information est lue par le calculateur, rendu solidaire du dispositif d'entraînement des tiges et qui permet de déterminer les longueurs de coupe.

Avantageusement et en pratique, dans un tel dispositif :

- le dispositif d'entraînement des tiges est constitué de galets souples entraînés en rotation en contact sur les tiges ;
- le système de détection de forme comporte deux capteurs analogiques disposés à 90° l'un par rapport à l'autre permettant ainsi la mesure du diamètre selon deux axes ;
- les rotors sont au nombre de deux disposés l'un au-dessus de l'autre et tournent en sens opposé, supportant un nombre égal de couteaux ;
- le positionnement du rotor est constitué d'engrenages et d'un capteur détectant des trous ménagés sur l'un des engrenages ;
- l'embrayage-frein est constitué de deux actionneurs séparés pour la commande de marche et d'arrêt et ;
- le codeur est rendu solidaire du dispositif d'entraînement des tiges au moyen d'une chaine et d'un pignon dont le rapport est de 1/1 si le diamètre des galets est de moitié du diamètre de la circonférence engendrée par les couteaux.

L'invention et les avantages qu'elle apporte seront cependant mieux compris grâce à la suite de la description et des figures annexées dans lesquelles :

- la figure 1 est une vue de l'ensemble du dispositif objet de l'invention ;
- la figure 2 est une vue de gauche montrant la face des deux rotors supportant les lames de coupes ;
- la figure 3 est une vue de coupe suivant l'axe BB de la figure 1 illustrant les moyens d'entraînement en rotation sans jeu des rotors de coupes ;
- la figure 4 est une vue en coupe suivant l'axe AA de la figure 1 illustrant le montage des capteurs de l'ensemble détecteur de forme.

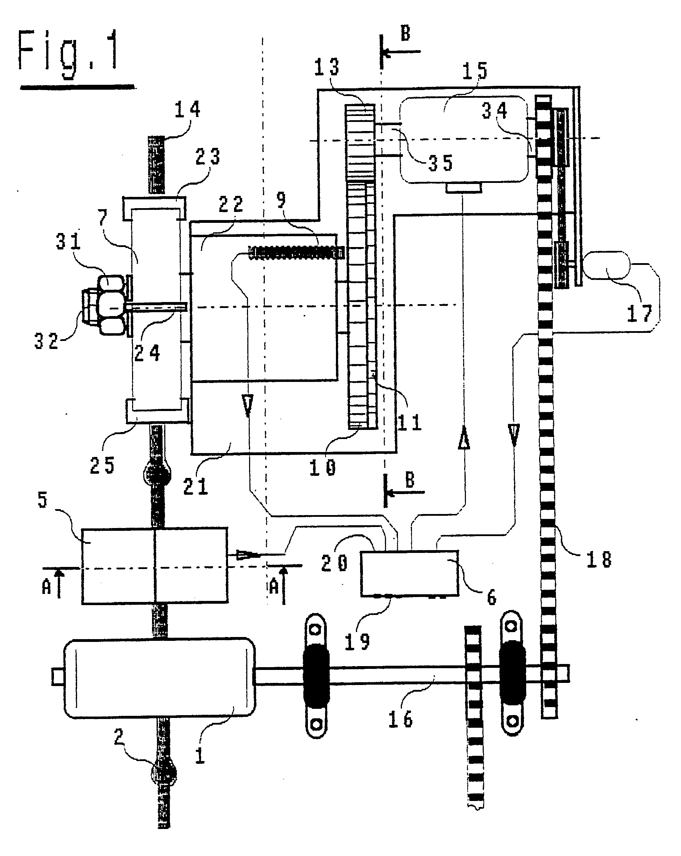

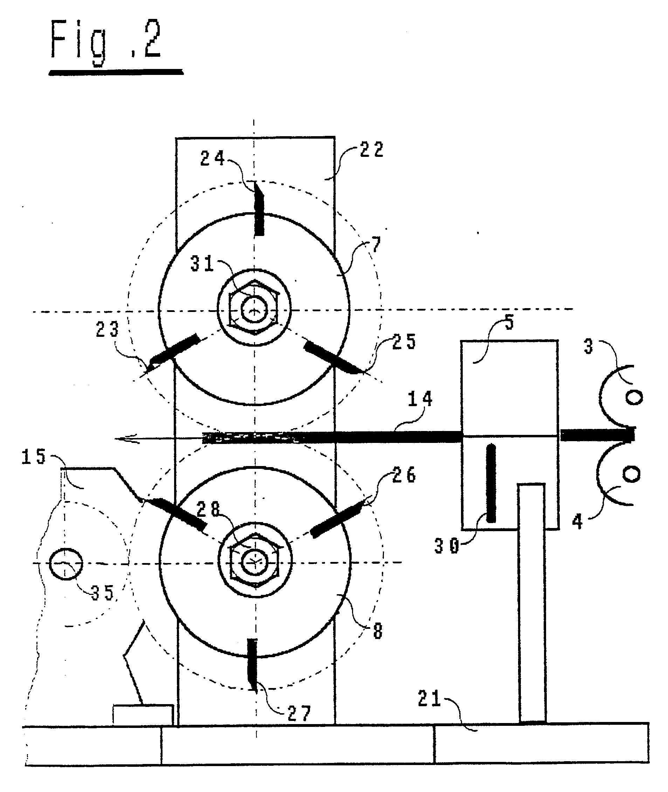

Tel que représenté sur la figure 1 et la figure 2, le dispositif objet de la présente invention est constitué par un dispositif d'entraînement (1) des sarments, formé de deux galets (3) et (4) en matière souple permettant un déplacement linéaire et positif. Le sarment (14) est alors poussé à l'intérieur d'un système de détection opto-électronique (5) des aspérités (2) fournissant un signal électrique à un calculateur (6). A la sortie du système de détection, il est guidé entre deux rotors (7) et (8) supportant des couteaux. Les rotors de coupe sont solidaires par l'intermédiaire d'engrenages (10,11 et 12) permettant ainsi au moment de la coupe d'obtenir un mouvement synchrone et en sens opposé. Ces engrenages sont actionnés en rotation par un embrayage-frein (15), lui-même commandé par le calculateur, l'embrayage étant disposé en amont. L'embrayage est entraîné par l'arbre (16) des galets permettant le déplacement du sarment. L'arbre (16) est entraîné par le moteur de la machine. Le déplacement du sarment est contrôlé par le calculateur (6) avec un codeur (17) qui fournit des impulsions proportionnelles aux millimètres d'avance du sarment. L'ensemble monté est représenté par la figure 1.

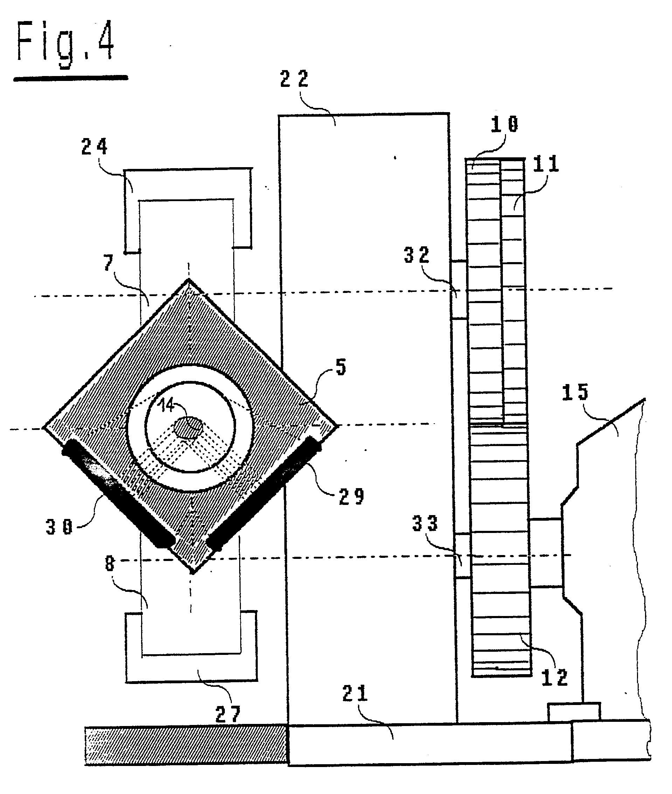

Le système de détection des aspérités ou des formes (figure 4) est basé sur la mesure de diamètre des sarments. Deux capteurs (29) et (30) positionnés à 90 degrés l'un par rapport à l'autre fournissent chacun un signal analogique proportionnel au diamètre du sarment. Ces signaux sont traités par le calculateur (6) en fonction de l'avance du sarment. Pour chaque unité d'avance du sarment, le calculateur lit les signaux analogiques pour déterminer la position des yeux ou celle des aspérités (2). La longueur des aspérités détectée est mesurée pour en déterminer son axe, la position de cet axe permettra au calculateur de déterminer le point de coupe. L'information du système de détection permet au calculateur de déterminer également la présence ou la non-présence du sarment.

Les rotors de coupe (7) et (8), tels que le montre la figure 2, sont identiques et constitués de cylindres permettant la fixation des couteaux (23,24,25 et 26,27,28) qui attaquent simultanément le sarment de part et d'autre de son diamètre. Les couteaux sont fixés en nombre égal sur chaque rotor, et leur montage est identique. Ces couteaux ont un profil et une arête tranchante permettant une pénétration dans le bois sans écrasement. La pénétration s'effectue synchrone avec l'avance du sarment. Chaque rotor est fixé sur son arbre suivant une forme conique, il est bloqué par l'intermédiaire d'un écrou frein (31). Les rotors sont ainsi solidaires de leur arbre d'entraînement. Ce principe permet un positionnement libre et précis de chaque rotor.

Un bloc de métal usiné (22) apparaissant sur la figure 1 permet le montage des roulements supportant les arbres (32,33) communs à chaque rotor et engrenage. Dans ce palier (22) est prévue la fixation du capteur (28). Le palier (22) repose sur la plaque (21) qui supporte également l'embrayage-frein (15). Sur cette plaque, est également fixé le codeur (17) côté arbre d'entrée (34).

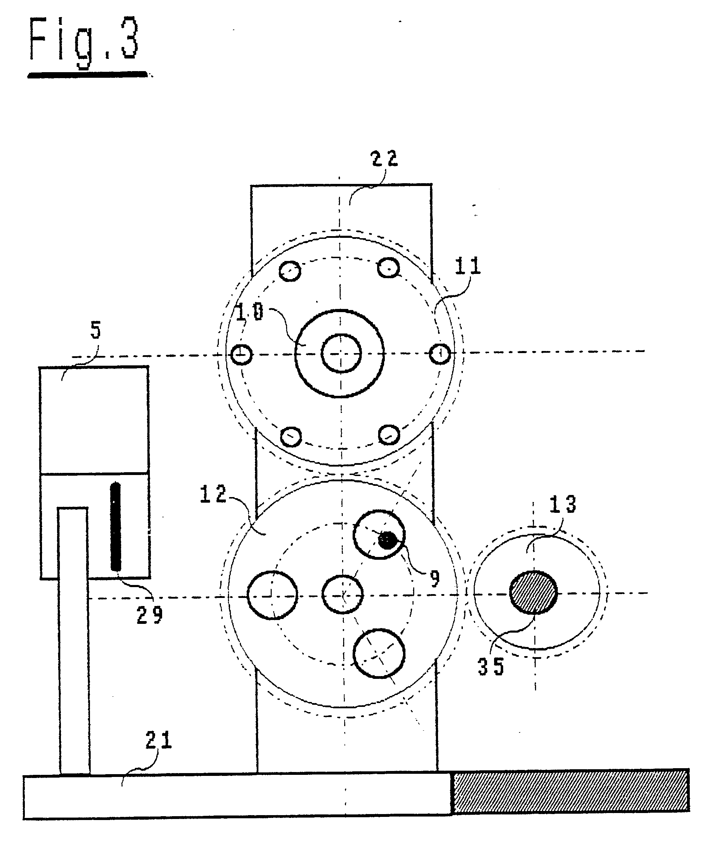

Les engrenages (10,11,12) montrés par la figure 1 et la figure 3, rendent les rotors solidaires et permettent par l'intermédiaire du capteur (9) de positionner les couteaux. Des trous sur l'engrenage (12), en nombre égal au nombre de couteaux supportés par un rotor, d'un diamétre supérieur au capteur (9), sont détectés pr le capteur pour déterminer la position des couteaux. Le calculateur stoppera la rotation des couteaux au moment de la détection d'un trou.

Quand il commandera la rotation des couteaux pour réaliser une coupe, il comptera le nombre d'impulsions envoyées par le codeur (17) jusqu'au moment où le trou disparaitra électriquement de la face du capteur (9). Le calculateur pourra ainsi déterminer la position des couteaux avec précision. Cette position lui permet de calculer l'instant de commande pour actionner la coupe à l'endroit désiré sur le sarment.

l'embrayage-frein (15) est constitué :
- d'une part, d'un arbre-moteur d'entrée en rotation constante et synchrone à l'avance des sarments ;
- d'autre part, d'un arbre récepteur de sortie (35) solidaire par l'intermédiaire du pignon (13) à l'engrenage (12).

A l'intérieur de l'embrayage, deux actionneurs permettent :
- de rendre solidaire l'arbre d'entrée (34) avec l'arbre de sortie (35) réalisant l'embrayage ;
- ou de désolidariser l'arbre d'entrée (34) de l'arbre de sortie (35) réalisant le débrayage et le blocage mécanique de l'arbre de sortie (35).

Ces deux actionneurs sont commandés par le calculateur.

Le codeur (17) est un dispositif standard qui génère des signaux électriques proportionnels à l'avance du sarment. Il est entraîné par l'arbre d'entrée (34) synchrone à l'avance des sarments.

L'arbre d'entrée (34) est entraîné en rotation constante par l'intermédiaire d'un organe qui peut être une chaîne (18) raccordée à l'arbre (16) des galets. Le rapport d'entraînement étant de 1/1, si le diamètre des galets (3,4) est de moitié du diamètre de la circonférence engendrée par le sommet des couteaux.

Le calculateur (6) est constitué d'un coffret comportant à l'intérieur des cartes électroniques à l'extérieur sur sa face arrière (20) les raccordements électriques et sur sa face avant (19) une unité de dialogue interactif permettant à l'utilisateur de fournir les informations et les paramètres de coupe.

L'unité de dialogue permet de :
- choisir la longueur minimum de la coupe ;
- choisir la distance entre l'axe de l'oeil ou aspérité et la coupe (talon) ;
- de déterminer le nombre de coupes par lots ;
- de visualiser le totalisateur de coupes.

La commande de coupe sera fonction des paramètres fournis par l'utilisateur, de la position de l'oeil ou aspérité sur le sarment et de la mesure faite lors de la commande précédente.

Le dispositif objet de la présente invention fonctionne de la manière décrite ci-après.

Une longueur de sarment est rentrée par l'utilisateur dans la machine ; sa présence est déterminée par le calculateur à partir du système de détection. Dès cet instant, les impulsions du codeur sont comptées pour déterminer l'avance du sarment mesurée en millimètres. Lorque cette avance est égale à la longueur minimum (paramètre rentré par l'utilisateur), le système se met dans la phase d'attente de l'oeil ou de l'aspérité suivante. Lorsque l'oeil ou l'aspérité suivante se présente devant la détection (5) et que la longueur de cet oeil est mesurée, le calcul du point de coupe est effectué, en tenant compte de la distance appelée talon. A cet instant, le compteur est réinitialisé pour permettre la mesure de la prochaine distance de coupe. Le point de coupe ainsi calculé, permet de déterminer l'instant de la commande d'embrayage. Cet instant est calculé en tenant compte de l'angle formé par les couteaux en position d'arrêt.

Le délai de commande d'embrayage étant écoulé, l'embrayage est excité, ce qui rend solidaires les couteaux avec l'arbre d'entrée (34) ; les rotors se mettent à tourner, le sommet des couteaux avance à la vitesse du sarment et se rapproche vers celui-ci pour le sectionner. Le sectionnement complet est obtenu lorsque les couteaux se retrouvent dans l'axe des deux rotors et en contact mécanique.

L'arrêt des rotors s'effectue avec l'apparition du trou sur l'engrenage (12) permettant le positionnement des couteaux. L'arrêt des couteaux s'effectue en plusieurs phases : désembrayage, attente de réaction de l'actionneur, freinage et durée de freinage.

Le système est alors à nouveau en phase d'attente d'avance de sarment. Les opérations ainsi décrites sont reconduites jusqu'à épuisement de la longueur. La fin du processus est détectée par la non-présence du sarment. Le cycle reprend avec une nouvelle longueur.

**Revendications**

1/ Procédé permettant de découper des tiges végétales pleines en vue de produire des boutures, caractérisé en ce qu'il consiste :
- à déplacer sur toute sa longueur la tige végétale devant un système de détection de forme ;
- à produire simultanément au déplacement de la tige des impulsions permettant de déterminer la dimension minimale de la bouture ;
- à déceler la présence d'yeux ou d'aspérités au moyen du système de détection de forme ;
- à procéder à la coupe.

2/ Procédé selon la revendication 1, caractérisé en ce que la coupe est obtenue par la mise en mouvement de couteaux par excitation d'un embrayage.

3/ Procédé selon les revendications 1 et 2, caractérisé en ce qu'il consiste à détecter la fin du cycle de coupe en générant une impulsion produite par un capteur sensible à une information disposée sur un engrenage solidaire de l'embrayage.

4/ Dispositif destiné à découper des tiges végétales pleines en vue de produire des boutures, mettant en oeuvre le procédé selon l'une des revendications 1 à 3, caractérisé en ce qu'il comprend essentiellement deux rotors cylindriques supportant des lames de coupe (23,24,25), (26,27,28) réparties autour des rotors et en nombre égal sur chaque rotor, lesdits rotors tournant par tour ou par tiers de tour au moment de la coupe, en sens inverse l'un par rapport à l'autre, et étant solidaires et entraînés en rotation par des engrenages qui permettent de faire passer les lames une devant l'autre avec un jeu et un empiètement minimums.

5/ Dispositif selon la revendication 4, caractérisé en ce qu'il comporte, en combinaison :
- un dispositif d'entraînement (1) des tiges, entraînant ces dernières dans un système de détection de forme (5) relié à un calculateur (6) mettant en mouvement des rotors munis d'outils de coupe (23,24,25) et (26,27,28) associé à un dispositif de positionnement mû par un ensemble embrayage-frein lui-même entraîné par le dispositif d'entraînement des tiges permettant ainsi la commande de la coupe ;
- un codeur dont l'information est lue par le calculateur, rendu solidaire du dispositif d'entraînement des tiges permet de de déterminer les longueurs de coupe.

6/ Dispositif selon la revendication 5, caractérisé en ce que le dispositif d'entraînement des tiges (1) est constitué de galets souples (3,4) entraînés en rotation en contact sur les tiges.

7/ Dispositif selon la revendication 5, caractérisé en ce que le système de détection de forme comporte deux capteurs analogiques (29,30) disposés à 90° l'un par rapport à l'autre, permettant ainsi une mesure de diamètre selon deux axes.

8/ Dispositif selon la revendication 5, caractérisé en ce que les rotors sont au nombre de deux, disposés l'un au-dessus de l'autre et tournent en sens opposé, supportant un nombre égal de couteaux.

9/ Dispositif selon la revendication 5, caractérisé en ce que le dispositif de positionnement des rotors est constitué d'engrenages et d'un capteur détectant des trous ménagés sur l'engrenage (12), l'engrenage (13) fixé sur l'embrayage est en contact avec l'engrenage (12), solidaire de l'arbre-rotor lui-même en contact avec les engrenages (10,11).

10/ Dispositif selon la revendication 5, caractérisé en ce que l'ensemble embrayage-frein est constitué de deux actionneurs séparés pour la commande de marche et d'arrêt.

11/ Dispositif selon la revendication 5, caractérisé en ce que le codeur est rendu solidaire du dispositif d'entraînement des tiges au moyen d'une chaine (18) et d'un pignon dont le rapport est de 1/1 si le diamètre des galets est de moitié du diamètre de la circonférence engendrée par les couteaux.

# Fig.1

# Fig .2

# Fig.3

# Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| P,X | EP-A-374063 (DURAND INTERNATIONAL) <br> * colonne 4, ligne 2 - colonne 5, ligne 56 * <br> * colonne 7, ligne 46 - colonne 9, ligne 31; figure 1 * | 1 | A01G1/06 |
| A | | 4-7 | |
| A | SOVIET INVENTIONS ILLUSTRATED, week 84/12, Derwent Publications Ltd.,London GB, no. 84-074141/12 <br> & SU-A-1021413 (MOLD WINE GROWING) | 1, 4, 5, 6 | |
| A | SOVIET INVENTIONS ILLUSTRATED, week 84/28 Derwent Publications Ltd.,London GB no.84-175847/28 <br> & SU-A-1052196 (KISH PLODSELKHO7MAS) | 1, 4, 5, 6 | |
| A | FR-A-2498417 (SOTERN & ICA) <br> * page 4, ligne 37 - page 11, ligne 11; figures 1-7 * | 1, 4, 5, 6 | |
| A | DE-A-2155105 (ÖSTBERGS FABRIKS) <br> * page 3, alinéa 2 - page 6, alinéa 1; figure 1 * | 1, 4, 5 | DOMAINES TECHNIQUES RECHERCHES (Int. Cl.5 ) <br><br> A01G |

Le présent rapport a été établi pour toutes les revendications

| Lieu de la recherche | Date d'achèvement de la recherche | Examinateur |
|---|---|---|
| LA HAYE | 03 OCTOBRE 1990 | HERYGERS J.J. |

EPO FORM 1503 03.82 (P0402)